# EUROPEAN PATENT APPLICATION

(11) **EP 1 792 542 A1**
(43) Date of publication of application: **06.06.2007**
(21) Application number: 05077751.5
(22) Date of filing: 02.12.2005
(51) Int. Cl.: A23L 1/00, A23L 1/015, A23D 9/00, A23L 1/29, C11B 1/00, A23L 3/3589, B01D 11/00

(54) **A method for producing a prepared food product having a reduced content of species**

(71) Applicant: SCF Technologies A/S, 2500 Valby (DK)
(72) Inventor: Brummerstedt Iversen, Steen, 2950 Vedbaek (DK); Jensen, Henrik, 2000 Frederiksberg (DK); Larsen, Tommy, 4200 Slagelse (DK)
(74) Representative: Plougmann & Vingtoft A/S

(57) **Abstract**

This invention relates to the treatment of a prepared food product or an intermediate product for a prepared food product having a reduced content of species and a product hereof. In particular the method relates to a method of producing healthier and tastier food products without loosing the mechanical integrity of such products. The method involves post-processing of prepared foods by at least one treatment by a fluid at supercritical conditions, and generally results in products having a reduced fat content and/or reduced content of other species.

## Description

### FIELD OF INVENTION

This invention relates to the method of treating a prepared food product or an intermediate product for a prepared food product so as to have a reduced content of fat and/or other species. In particular the method relates to the production of healthier and tastier food products without losing the mechanical integrity of such products. The method involves post-processing of prepared foods by at least one treatment by a fluid at supercritical conditions and generally results in products having a reduced fat content and/or reduced content of other species.

### BACKGROUND

Extraction of fat and oil from food products has drawn much attention during the last few years due to an increasing number of obesity cases and heart diseases. However, the problem of producing healthier food products by reducing the fat content and/or other species without losing the physical appearance, taste and flavour has still not been solved.

There is a huge interest in food products with improved functionality and health benefits. Such food products include fat reduced or low fat food products and in 2000 a total of 1,057 new food products bearing reduced or low fat designations were introduced at the American market. However, in areas such as lower fat salty snacks, consumers are still waiting for a lower fat product with enough flavour to satisfy them [Allshouse et al., 2002].

The definition of low, free, reduced, less, and light food products are used as specified by the U.S. Food and Drug Administration, FDA. A low fat food product is a food product that meets the definition of "low" if a person can eat a large amount of the food product without exceeding the "Daily Value" for the nutrient. As a general rule a food product meets the definition of low if it contains less than 5 percent of the Daily Value of the nutrient. As a reference, the Daily value of fat based on a 2,000 calorie diet is 65 grams [Allshouse et al., 2002].

To obtain a designation on a fat-free food product, it has to contain less than 0.5 grams of fat per serving. For a food product to bear a reduced-fat claim, it must have at least 25% percent less fat per serving than the reference food product. A product bearing light designation can contain half the fat of the reference food product [Allshouse et al., 2002].

Potato chips are the most popular snack item in the Western world. Potato chips are typically prepared by frying potato slices in hot oil, and the amount of oil absorbed by the chips during frying is what drives fat and calories up. Fried potato chips prepared by conventional methods usually have an oil or fat content ranging from about 30% to about 45% by weight or more. Several methods have been suggested for reducing the fat or oil content by changing the preparation method where temperature and oil play key roles; however, the fat content is still above 20% [Moreira, 2003]. Furthermore, when the frying oil is exposed to conditions with temperatures up to 140-200°C in the presence of trace metals, it results in degradation of the frying oil triacylglycerols, by oxidation, polymerization, isomerization, cyclization, and hydrolysis reactions. While major quantities of the volatiles are steam-distilled out of the frying oil, some quantities of the volatiles remain in the oil and in the fried food products affecting the flavour and odour quality of food products fried in oil.

Research related to fat reduced snack products shows that consumers are turning away from the reduced or low fat snacks product due to the loss of organoleptic properties such as flavours compared to the original snack [Allshouse et al., 2002]. Hence, there is a need for low fat products with improved organoleptic properties.

The removal or reduction of cholesterol from food and especially from animal food has also been studied intensively due to the fact that an elevated level of cholesterol is an important risk factor in coronary heart diseases. People with a concentration of >200 mg/dL are considered to be at increased risk and recommendation of the daily intake of dietary cholesterol is to be limited to 300 mg per day at a maximum. The cholesterol content of cow milk is 12.3 mg/100g and approximately 100 mg/100 g in cheese [Sieber, 1993] and 7-8 mg/100 g in a regular potato chip [www.annecollins.com] although other claims potato chips to be cholesterol free [Mipotato, 2005].

The content of acrylamide in food products and particular in snacks such as potato chips has been investigated intensively during the last few years. Acrylamide appears to form as a by-product of high-temperature cooking processes greater than 120°C. It does not appear to be present in food before cooking. Researchers have found that the amino acid asparagine is to blame for the production of acrylamide. When heated above 120°C, asparagine, as well as other amino acids, reacts with sugars via the Maillard reaction. This process produces intermediates that confer taste, aroma, and color in food products during cooking. Different cooking temperatures and time, the amount of free asparagine and the availability of sugars in food products give rise to the variability of acrylamide levels in a consumer product. For instance, potatoes and certain cereal grains contain high levels of free asparagines and are rich in carbohydrates [Lagalante, 2005].

The U.S. FDA, the European Commission, and the World Health Organization (WHO) agree that the presence of acrylamide in food is a major concern and will investigate the possible health risks from acrylamide in food over the next several years [Lagalante, 2005].

Acrylamide is considered a potential human carcinogen, a neurotoxicant and a genotoxicant. The WHO and the US Environmental Protection Agency (EPA) standard for acrylamide in drinking water is 0.5 ppb. In the NFA research, the highest levels of acrylamide were found in potato chips (median of 1,200 ppb), French fries (450 ppb), biscuits and crackers (410 ppb), crisp breads (140 ppb), breakfast cereals (160 ppb), and corn chips (150 ppb). A person's average intake of acrylamide from food is estimated at 35 to 40 mg per day. It is not yet possible to determine what percentage of overall acrylamide presence in the human body comes from starch-based food. Indeed, because other kinds of food, such as fruits, vegetables, meats and seafood, and beverages and other exposures such as cigarettes, also may result in acrylamide entering the human body, it is not known what percentage of the total acrylamide in a human body is from food sources [Lagalante, 2005].

Functional food is gaining in popularity and as an additional step to food processing an addition of functional ingredients such as vitamins, minerals, and natural products can lead to food products with improved health benefits exemplified with breakfast cereals containing Ginkgo and Omega-3 egg products.

Fat reduction of food products includes dairy products such as milk, cheese, meat, chocolate, baked goods products, fried food products such as snack products etc. The problem of previous methods for fat reduction is to maintain the taste, flavour, and mechanical integrity of the food product. The fried food products have attracted a particular attention since it contains a large amount of fat, 30-40%. Furthermore, fried food is often recognized by it physical appearance such as crispiness, consistency, and shape which is often remarkably changed during the fat reduction process.

In addition to traditional deep-fat frying, experiments with vacuum drying and steam drying have been carried out. Vacuum drying can produce potato chips with 27 percent oil content compared to the 38 percent oil content for current chip frying technique [Moreira, 2003].

Since the 1980's supercritical fluids have been investigated as solvents for the extraction of food products starting with extraction of caffeine from coffee. Since the 1990's supercritical fluid extraction (SFE) has experienced considerable interest culminating in the late 90's. SFE has consolidated in some areas, including environmental, pharmaceutical and polymer analysis; above all, however, it has merely been used for analysing food [Zougagh et al., 2004].

Supercritical fluids are excellent solvents for the use in extraction processes in general [Zougagh et al., 2004], but also in the food industry where several common food products are produced by SFE and supercritical technologies such as decaffeinated coffee and tea, flavoured enhanced orange juice, de-alcoholised wine and beer etc. [Brunner, 2005].

Mchugh and Krukonis reports a supercritical extraction process for de-oiling of potato chips, wherein approximately 50 % of the oils in potato chips are extracted, resulting in a potato chip product with about 20 % residual fat content [McHugh, M. A. & Krukonis, V. J., p.302-303, 1994]

Vijayan et al. [Vijayan et al., 1994] reports laboratory results for supercritical extraction of fats and oils from potato chips at a pressure of 408 bar (6000 PSI) and a temperature of 55°C. The amount of oil removed is 50-80 % using a supercritical CO₂ flow in the range 6.000 to 13.000 I per kg of potato chips treated. The huge CO₂ flow combined with the separation conditions at 11-69 bar and a temperature in the range 30-50°C result in a huge energy consumption, which is probably why this technology has never materialized commercially.

Hence, known methods of reducing the fat content of prepared products are not capable of reducing the fat content to sufficiently low levels and/or use so much energy for this fat-reduction step that these prior art fat-reducing methods are not commercially interesting for products having a low moisture content.

### DESCRIPTION OF THE INVENTION

As may become clear from the description above, many methods focus on the production of healthier food products with or without improved functionality have been performed. Reduction of individual species such as fat or cholesterol has proven to be technically feasible. However, none of the methods address the important issue of producing such food products, while sufficiently maintaining the mechanical integrity, flavour, and/or nutritional properties of the product. Such products having a reduced content of individual species as mentioned above and maintaining the mechanical integrity, flavour, and/or nutritional properties are still not available.

Hence, an objective of the present invention is to provide an improved method for producing such products, and related improved products produced by the method.

In particular, an objective of the present invention is to provide an improved method for treating prepared food products such as fried products to have a reduced content of species like fat and/or oil and/or cholesterol and/or pesticides and/or carcinogenic and/or neurotoxicant and/or genotoxicant species such as acrylamide.

Another objective of the present invention may be to provide a method improving the mechanical integrity of such prepared food products.

Still another objective of the present invention may be to provide an improved method being more energy efficient and/or having shorter processing times.

A further objective of the present invention may be to provide a method improving the organoleptic properties such as taste and/or flavour and/or nutritional properties of such prepared food products.

A still further objective of the present invention may be to provide an improved method being more controllable and/or more efficient and/or more economical processing of such prepared food products.

An objective of the present invention may also be to provide an improved method resulting in that said species being reduced in said prepared food material to be recovered in a form and/or purity suitable for recycling and/or quality suitable for sale.

An objective of the present invention may further be to provide an improved prepared food product.

These objectives and the advantages will be evident from the following description of the invention and the preferred embodiments and aspects.

In a first aspect, the present invention relates to the production of an improved prepared food product. Hence, a preferred embodiment of a fat reducing method for treating a prepared food material having a mechanical integrity comprises the steps of:
a) supplying said prepared food material to be treated into a vessel,
b) subjecting said prepared food material to at least one fluid at supercritical conditions in said vessel,
c) pressurising said vessel,
d) maintaining said prepared food material in contact with said fluid or fluid mixture a predefined time in order to extract at least one specie from the material into the fluid or fluid mixture,
e) withdrawing at least part of said fluid or fluid mixture present in said vessel at least part time of said method, and separating dissolved species from said fluid or fluid mixture being withdrawn at least part time of said method, and subsequently feeding the fluid or fluid mixture back to said pressure vessel,
f) depressurising said vessel,
wherein said mechanical integrity of said prepared food material is maintained by controlling the rate of pressurization and depressurization during said one or more pressurization step/-s and/or one or more depressurization step/-s in a predefined manner in specific pressure intervals.

The term prepared food material or product in the present context is intended to mean any product being prepared to eat in some extent. Hence the term prepared food material or product in the present context is intended to also mean a ready-prepared product/dish, ready-made product/dish, ready-cooked product/dish, ready to use product, convenience food products, manufactured foods, finished foods etc.

The term intermediate product is intended to mean any product being prepared in some extent however the intermediate product is subsequently used to prepare a final dish. The intermediate product may still need to be heated before being added to the rest of the dish.

The physical appearance or mechanical integrity is defined as a solid having a coherent structure and is intended to mean the visual and physical properties connected thereto and distinctively represented by the product. The physical appearance or mechanical integrity of the product may further have some of the properties crispiness, colour, textural appearance, stiffness, shape, size, and/or thickness.

The term prepared food products comprises food products such as fried food products, baked food products, breakfast cereals, snack products, cookies, biscuits, meat products such as bacon, bacon bits, croutons, natural products such as nuts, peanuts, pistacie nuts, cashew nuts, chest nuts, hazelnuts, peacons, almonds, pine nuts, corn or popcorns, French fries, banana chips, salad additives, etc. Many applications according to the present invention involve the treatment of a salted and or spiced food product and such products.

The term species in the present context is intended to mean any chemical substances or elements inside a prepared food product or material.

In another aspect of the present invention the pressure in said vessel after pressurisation may be in the range 85-1000 bar, preferably in the range 85-500 bar, such as in the range 200-400 bar, and even more preferably in the range 250-400 bar such as in the range 300-375 bar.

Additionally, the temperature in the vessel may according to the present invention be maintained in the range 60-200 °C, such as 60-150 °C, and preferable in the range 75-120 °C, and more preferable in the range 80-110 °C such as in the range 90-105 °C.

Furthermore, in an aspect of the present invention the steps c) to e) may be repeated in order to extract at least one other species. It is hereby obtained that to be able to extract species separately, and by extracting the species separately considerable savings in the energy consumption are obtained in that that low pressure soluble species are extracted first.

In another aspect of the present invention at least one of said separations during step e) may be done at supercritical conditions.

According to an embodiment of the invention, the pressure within said vessel during a first run of the steps c) to e) may be less than 200 bar and the pressure within said vessel during a second run of the steps c) to e) may be up to 380 bar.

In one embodiment the method of the present invention may have an energy consumption during the treatment, and that the energy consumption per kg of prepared food material may be less than 10 kWh per kg of prepared food material treated such as less than 5 KWh per kilogram of prepared food treated, preferably less than 3 kWh per kg of prepared food material treated such as less than 1.5 kWh per kg of prepared food treated, and even more preferably the energy consumption is less than 1 kWh per kg of prepared food material treated such as less than 0.5 kWh per kg of prepared food material treated.

According to another aspect of the present invention, the temperature within said vessel during the first run may be in the range 35-120 °C, such as in the range 40-105 °C and the temperature within said vessel during the second run may be in the range 70-150 C, such as in the range 80-120 °C.

In a preferred embodiment the control of the rate of (de)pressurization is typically performed in the pressure range from 40 to 120 bar, such as in the pressure range from 50-110 bar, and particularly in the pressure range from 60 to 100 bar. In many applications according to the present invention, the rate of (de)pressurization in at least part of the specific pressure ranges above is controlled so it is/are at the most one half of the maximum rate of the (de)pressurization outside this range, such as maximum one third of the maximum rate of (de)pressurization outside this pressure range, and preferably at the most one fifth of the maximum rate of pressurization outside this pressure range, such as at the most one tenth of the maximum rate of pressurization outside this pressure range.

Often said method further involve controlling the temperature in a predefined manner during said (de)pressurization periods as the temperature during said de(pressurization) periods has an impact on the pressure strength and thus the mechanical integrity of many of said prepared food materials, which may be treated according to the present invention. In general the temperature in the pressure vessel is always controlled such that the fluid present in said pressure vessel is always in a gaseous or a supercritical state during all of the method. This may involve controlling the temperature at pressures above 40 bars such that the temperature within said pressure vessel is at least at least 35 °C such as at least 40 °C, and preferably at least 50 °C such as at least 60 °C.

Often also an upper limit of the temperature within the pressure vessel during said (de)pressurization periods exists. This upper temperature limit may be due to thermosensitive species contained in said prepared food material, which may degrade and/or deteriorate if subjected to too high temperatures in prolonged periods. Other prepared food materials may soften or may have a reduced structural strength, when subjected to too high temperatures for prolonged periods. The latter may limit the rate of (de)pressurization, which can be applied without loosing the mechanical integrity of said prepared food product, and may therefore significantly increase the processing time. Hence, in many applications according to the present invention involve controlling the maximum temperature within said pressure vessel during said de(pressurization) periods to a temperature of at the most 120 °C such as at the most 110 °C, and preferable at the most 100 °C, and preferably to a maximum temperature of at the most 90 °C such as at the most 80 °C, and more preferably at the most 70 °C such as at the most 60 °C depending on the specific material being treated.

The temperature may be controlled by controlling the inlet temperature of the fluid being used for pressurization of the pressure vessel and/or applying a thermo-stated jacket to the pressure vessel. A suitable system for temperature control must be able to both add and extract heat in order to control the temperature. Many prepared food materials relevant to the present invention have a relatively low heat conductivity, which makes it a difficult task to ensure a uniform temperature profile within said pressure vessel, especially in large scale vessel. Even relatively small temperature differences within said pressure vessel may affect the quality of the treated prepared food material significantly, and may lead to large quality variations and/or excessively long processing times, which may be detrimental to the overall process economy.

Hence, in a particularly preferred embodiment of the present invention, the temperature within said pressure vessel during at least part of said pressurization or depressurization periods is at least partly controlled by withdrawing from said pressure vessel at least part of the fluid contained within the pressure vessel and feeding it to an external re-circulation loop wherein the temperature is controlled by adding or extracting heat to the fluid and subsequently feeding it back to the pressure vessel. In order to maximize the effect of withdrawing said fluid for temperature adjustment, the fluid volume withdrawn from said pressure vessel needs to be of a certain size. Hence, in a preferred mode the fluid volume withdrawn from said vessel corresponds to the exchange of at least one vessel volume per hour such as at least two vessel volume exchanges per hour, preferably at least 5 vessel volume exchanges per hour, and preferably it should be in the range 10-20 vessel volume exchanges per hour. In a further preferred mode fluid in said re-circulation has substantially the same thermodynamic properties as the fluid contained in the vessel such as the fluid do not undergo a phase change to a liquid and/or solid state within said re-circulation loop.

The fluid/-s being in a supercritical state according to the present invention may be selected from the group consisting of carbon dioxide, alcohols such as methanol, ethanol, propanol, isopropanol, buthanol, isobuthanol, pentanol, hexanol, water, methane, ethane, propane, buthane, pentane, hexane, cyclohexane, heptane, ammonia, sulfurhexafluoride, nitrous oxide, chlorotrifluoromethane, monofluoromethane, acetone, THF, acetic acid, citric acid, ethylene glycol, polyethylene glycol, N,N-dimethylaniline and mixtures thereof.

Many preferred embodiments of the present invention, involves a treatment by a fluid and/or fluid mixture comprising CO₂ in at least part of the method according to the present invention. Said fluid and/or fluid mixture may further comprise at least one co-solvent selected from the group consisting of alcohol(s), water, ethane, ethylene, propane, butane, pentane, hexane, heptane, ammonia, sulfurhexafluoride, nitrous oxide, chlorotrifluoromethane, monofluoromethane, methanol, ethanol, propanol, isopropanol, buthanol, pentanol, hexanol, acetone, DMSO, THF, acetic acid, ethyleneglycol, polyethyleneglycol, N,N-dimethylaniline and mixtures thereof. In particular water and ethanol may be used in many applications according to the present invention.

Typically co-solvent may be present in a concentration of up to 30 percent by weight (w/w %) such as up to 15 percent by weight, and preferably in an amount of up to 10 percent by weight such as up to 5 percent by weight. Further said co-solvent may only be present in part of said treatment being performed according to the present invention.

The species being reduced in said prepared food material in a method according to the present invention generally include lipids such as oils and/or fats. Such lipids may also include polar lipids such as triglycerides and/or phospholipids. In general said prepared food product treated according to the present invention comprises a primary product of method. The primary product may furthermore be separated from fluid and re-introduced into the vessel. This prepared food product thus generally comprises a fat reduced product, a light product, a low fat product and/or even a fat free product.

The reduction in lipids such as fat in said prepared food material treated according to the present invention is in general at 30 % such as at least 40 %, preferably at least 50 % such as 60 % and more preferably at least 70 % such as at least 80 %, and even more preferably at least 90 % such as at least 95 %. In special cases said fat reduction may be above 97,5 % such as above 99 %.

The fat content may be reduced to a level below 16 % by weight such as below 12 % by weight, preferably below 10 % by weight such as below 7 %, and even more preferably below 5 % by weight such as below 3 % by weight.

In general said reduction of the fat content in said prepared food material by subjecting and maintaining said material to at least one fluid at supercritical conditions in a predefined time is performed at a pressure above 100 bar, such as above 150 bar and preferably at a pressure above 200 bar such as a pressure above 250 bar, and even more preferably at a pressure above 300 bar such as a pressure above 350 bar. A particularly preferred pressure range for performing said reduction of the fat content according to the present invention is in the range 150-500 bar such as in the range 200-450 bar, and preferably in the range 250-375 bar such as in the range 300-375 bar.

The pressure may be constant during part or substantially all of said fat reduction treatment or may vary according to a predefined schedule. In a specific case said fat reduction treatment may be performed partly during pressurization.

The temperature for said reduction of the fat content in said prepared food material by subjecting and maintaining said material to at least one fluid at supercritical conditions in a predefined time is performed at a temperature above 50 °C such as a temperature above 60 °C, and preferably at a temperature above 70 °C such as at a temperature above 80 °C, and even more preferably at a temperature above 90 °C such as a temperature above 100 °C. A particularly preferred temperature range for performing said reduction of the fat content according to the present invention is in the range 50-150 °C such as in the range 60-120 °C, and preferably in the range 70-120 °C such as in the range 85-110 °C.

The density for said reduction of the fat content in said prepared food material by subjecting and maintaining said material to at least one fluid at supercritical conditions in a predefined time is performed at a fluid density above 200 kg/m³ such as a fluid density above 300 kg/m³, and preferably at a fluid density above 400 kg/m³ such as at a fluid density above 500 kg/m³, and even more preferably at a fluid density above 600 kg/m³ such as a fluid density above 700 kg/m³. A particularly preferred density range for performing said reduction of the fat content according to the present invention is in the range 300-950 kg/m³ such as in the range 300-900 kg/m³ and preferably in the range 500-850 kg/m³ such as in the range 600-850 kg/m³.

The duration of said predefined time for said reduction of the fat content in said prepared food material by subjecting and maintaining said material to at least one fluid at supercritical conditions in a predefined time is generally less than 600 minutes such as a less than 300 minutes, and preferably less than 200 minutes such as less than 150 minutes, and even more preferably less than 100 minutes such as less than 60 minutes. A particularly preferred duration range of said predefined time for performing said reduction of the fat content according to the present invention is in the range 1 to 300 minutes such as in the range 10 to 240 minutes and preferably in the range 20 to 180 minutes such as in the range 30 to 120 minutes, and even more preferable in the range 40 to 90 minutes, such as in the range 50 to 80 minutes depending on the amount of fluid being withdrawn for separation during said predefined time and the specific prepared food material being treated.

Furthermore, the fluid may according to the present invention be withdrawn during the predefined time interval/-s.

The amount of fluid being withdrawn during said predefined time for fat reduction is generally below 300 kg of fluid per kg of prepared food material such as below 200 kg of fluid per kg of prepared food material, and preferably below 100 kg of fluid per kg of prepared food material such as below 80 kg of fluid per kg of prepared food material, and even more preferably below 50 kg of fluid per kg of prepared food material such as below 30 kg of fluid per kg of prepared food material. A particularly preferred range for the amount of fluid being withdrawn during said predefined time for fat reduction may be in the range 1-200 kg of fluid per kg of prepared food material such as in the range 5-150 kg of fluid per kg of prepared food material, and preferably in the range 10-100 kg of fluid per kg of prepared food material such as in the range 10-80 kg of fluid per kg of prepared food material, and even more preferable in the range 15-60 kg of fluid per kg of material, and even more preferably in the range 20-50 kg of fluid per kg of prepared food material depending on the desired fat reduction and the specific material being treated.

In a preferred embodiment of the present invention said fluid being withdrawn from said vessel with said species extracted from said prepared food material dissolved therein, is withdrawn to an external re-circulation loop, said re-circulation loop comprising means for separating said extracted species from said fluid, and means for feeding said fluid back to said vessel. Said separation means often comprise one or more cyclones. Typically the pressure and/or the temperature of said cyclone/-s may decrease. A fractionation of said separated species may often be obtained by suitable design of the number of separator stages.

In a particularly preferred embodiment of the present invention said separation of extracted species is performed at least partly at supercritical conditions such as substantially at supercritical conditions. As the energy consumption related depressurizing and re-pressurizing the fluid mixture withdrawn for separation typically contributes significantly to the treatment costs, such supercritical separation according to the present invention may result in very significant savings in the treatment costs.

A separation of said species at supercritical conditions may involve separating said extracted species at a pressure which are maximum 200 bar below the pressure with said pressure vessel such as maximum 150 bar below the pressure within said pressure vessel, and preferably maximum 100 bar below the pressure within said pressure vessel such as maximum 50 bars below the pressure within said pressure vessel. This may further involve performing said separation at a pressure above 150 bar such as above 200 bar, and preferably at a pressure above 250 bar such as a pressure above 300 bar, and even more preferably at a pressure above 350 bar such as a pressure above 400 bar.

The prepared food product is more healthy and cause less obesity and heart diseases due to the lower calories, a fat reduced product according to the present invention may have an increased nutrient value and higher fiber content. In addition prepared food products such as high oil content snacks present serious storage problems because of rancidity due to oxidative degradation of the oil/fat. A fat reduced prepared product according to the present invention may further have a reduced rancidity and increased shelf-life.

As key feature of the present invention is that the mechanical integrity of the present invention is substantially retained and/or enhanced. For instance, the crispiness of a snack product is often a key parameter for the consumer perception of such product. In a preferred embodiment, the crispiness of the prepared food product being treated according to the present invention may be controlled by controlling the humidity of said product. If a lower humidity is desired a water free fluid and/or fluid mixture may be applied. If a specific humidity is desired, a partial pressure of water corresponding to the equilibrium pressure at the specific operating temperature may be applied in at least the last part of the treatment according to the present invention. The content of other species may be controlled by applying similar considerations for such species. Other examples, wherein the mechanical integrity may be enhanced according to the present invention include applications, wherein a conversion of said prepared food material in to an expanded prepared food product.

In many applications of the present invention the water content of a prepared food product treated according to the present invention is substantially retained. Often the water content of prepared food products is in the range 1-5 % by weight, such as in the range 1-3 % by weight.

Other species than oil and fats are often being reduced in many applications of the present invention include cholesterol, and/or traces of pesticides and/or acryl amide. As the extracted fat, oil and other lipids in many applications may represent a considerable value if recovered in sufficiently pure form, it is desirable to recover such extracts in a quality suitable for sales and/or recycling.

The separated species may in one embodiment of the invention be fractionated and at least partly recycled to a pre-processing step.

Hence, in a particularly preferred embodiment of the present invention, said reduction of species from said prepared food product is performed by a selective extraction of said species. Such selective extraction according to the present invention generally comprises multiple subsequent extraction steps, wherein the thermodynamic state in each state is controlled so as to obtain a pre-defined thermodynamic state wherein a pre-defined extraction of species from said prepared food material in said vessel occur. Said selective extraction may involve a first extraction step, wherein the most soluble and/or volatile species at one pre-defined thermodynamic state, separating these from the fluid by conventional means at a sub-critical state, and feeding the fluid back to said pressurized vessel. Subsequent to said first extraction step the thermodynamic state in said pressure vessel may be dynamically changed to a second pre-defined state, wherein a second selective extraction of species occurs.

Furthermore, the pressure during steps d) and e) may according to the invention be increasing or decreasing. Additionally, the pressure during steps d) and e) may be substantially constant during the predefined time.

Hence, a particularly preferred embodiment according to the present invention involves
- supplying said prepared food material to be treated into a vessel
- pressurizing said vessel to a first pressure
- subjecting said prepared food material to a fluid or fluid mixture at supercritical conditions at this first pressure
- maintaining said in contact with said fluid or in a first predefined time
- withdrawing at least part of said fluid mixture present in said vessel at least part time of said first predefined time
- pressurizing said vessel to a second pressure
- subjecting said prepared food material to a fluid or fluid mixture at supercritical conditions at this second pressure
- maintaining said prepared food material in contact with said fluid or fluid mixture in a second predefined time
- withdrawing at least part of said fluid mixture present in said vessel at least part time of said second predefined time
- depressurizing said vessel.

By such selective extraction it is prevented that said first and second extracted species to be mixed. As the extracts in many applications of the present invention represents important byproduct from the method it is highly desirable not to contaminate the by-product as in case of the simultaneous extraction processes of the prior art. Further, as the solubility of the species remaining in the prepared food material after said first extraction period generally are low, such selective extraction according to the present invention enables subsequent separation at supercritical conditions. This significantly reduces the energy consumption and may significantly improve the process economy for many applications according to the present invention as further described in the examples.

In a particular embodiment extracted species such as fat may further be fractionated and/or purified during said subsequent separation at supercritical conditions. This may be performed by performing said separation in multiple stages with decreasing density in each stage such as a decreasing pressure in each stage.

The pressure during said first pre-defined time and/or second predefined time may be maintained substantially constant or may be increasing and/or decreasing during at least part of said first and second pre-defined times.

Often the thermodynamic state during said first pre-defined time is controlled so as the temperature in the vessel is in the range 35-150 °C, such as in the range of 70-150 °C, such as in the range of 80-120 °C such as in the range 50-110 °C, and the pressure is controlled so as the pressure in the vessel is in the range 80-250 bar such as in the range 100-200 bar. Further the thermodynamic state during said second pre-defined time is often controlled so as the temperature in the vessel is in the range 70-150 °C such as in the range 80-120 °C, and is controlled so as the pressure in the vessel is in the range 200-500 bar such as in the range 300-375 bar.

Furthermore, the method of the present invention may comprise multiple subsequent extraction steps before depressurizing said pressure vessel to ambient conditions.

In a specific application said first extraction of species in said first pre-defined time step may involve reducing cholesterol and/or traces of pesticides. Such species may according to an embodiment of the present invention be reduced by at least 30 % by weight such as at least 50 % by weight, and preferably by at least 70 % by weight such as at least 80 % by weight and even more preferably at least 90 % by weight such as at least 90 % by weight.

It should be noted that a method according to the present invention may comprise multiple extraction steps, each having a pre-defined thermodynamic state wherein a predefined reduction of species occur. For example, a specific embodiment according to the present invention comprises an extraction period, preferably in the third extraction period, involves reducing the amount of carcinogenic species such and/or neurotoxicant species and/or genotoxicant species such acrylamide in a subsequent extraction step. The reduction of said acrylamid may be at least 10 % such as at least 25 %, and preferably at least 40% such as at least 50 % and even more preferably at least 70 % such as at least 90 %.

The fluid used in each extraction step may be the same or may vary between said extraction steps.

In many cases according to the present invention, the organoleptic properties such as taste and/or flavor and/or aroma and/or color of the prepared food material may be substantially retained or even enhanced in the prepared food product after said treatment according to the present invention.

Furthermore, the properties of the prepared food material such as size, shape, crispiness, healthiness, color, physical and textural appearance is substantially retained during the treatment.

Additionally, the total water content of said prepared food material treated according to the method may be substantially unchanged. Likewise could the taste, flavor of the prepared food product in one embodiment be substantially unchanged or enhanced.

Said treatment according to the present invention may further involve addition of one or more ingredients in one or more steps to said prepared food material subsequent to said extraction treatment of the prepared food material by the method. Said one or more ingredients may include one or more functionally tailored ingredients such as a coloring agent and/or a conditioning agent and/or one or more aroma compounds and/or one or more flavors and/or one or more spices and/or one or more odor compounds and/or one or more nutrients and/or one or more micronutrients and/or one or more vitamins such as vitamin A and/or vitamin B and/or vitamin C and/or vitamin E and/or one or more minerals and/or more bioactive compounds such as one or more bioactive peptides and/or one or more enzymes and/or a conjugated linoleic acid (CLA) and/or one or more antioxidants and/or one or more compounds having a preservation effect and/or one or more compounds having a pharmaceutical effect.

The addition of said functional ingredients may be at least partly performed at supercritical conditions subsequent to said supercritical extraction treatment/-s before depressurization and/or at sub-critical conditions during said one or more de-pressurization step(s).

An embodiment according to the present invention involves addition of said functional tailored ingredient(s) by a post-process after said supercritical treatment. Said post-process may include addition said one or more functionally tailored ingredient(s) as a coating and/or thin film on the surface of said prepared food material.

In one embodiment of the present invention the method may further comprises at least one impregnation or coating step at supercritical conditions for adding said ingredient/-s to said material. Additionally, said at one or more impregnation or coating step(s) may be performed subsequent to said one or more extraction step(s) for extracting species prior to said one or more depressurisation step(s).

Said one or more impregnation or coating step/-s may furthermore be performed subsequent to said one or more extraction step/-s for extracting species during said one or more depressurisation step/-s.

In a particularly preferred embodiment according to the present invention said one or more functionally tailored ingredients may include addition of oil. Said oil may further include other functionally tailored ingredient(s) dispersed and/or dissolved therein. A preferred post-processing method may involve deposition of said surface film or coating by spraying.

In one aspect of the invention the re-circulation loop may comprise a vessel for introducing ingredients to said fluid present in said re-circulation loop.

In another aspect of the invention the prepared food material may have a moisture content of less than 20 w/w%, less than 10 w/w% , less than 5 w/w% and preferably in the range of 1-5 w/w%, and wherein the moisture content is substantially unchanged after the treatment.

In yet another aspect of the invention the density of the fluid in the vessel may be varied between an uppermost and lowermost level in a predefined manner during one or more of said supercritical treatment step/-s.

Additionally, the said density variations may correspond to a density change between said uppermost and lowermost level corresponds to a density change of up to 75 % such as up to 50 %, and preferable up to 30 % such as up to 15 %.

Furthermore, the density change may at least partly be introduced by varying the temperature of the fluid in the re-circulation loop according to a predefined schedule.

It should be noted that such preferred embodiment may involve reducing the fat content and/or other species to a level, wherein some desirable properties such as taste may not be retained after the supercritical treatment, but is retained and/or enhanced in the prepared food product after said post processing step.

### DESCRIPTION OF THE DRAWINGS

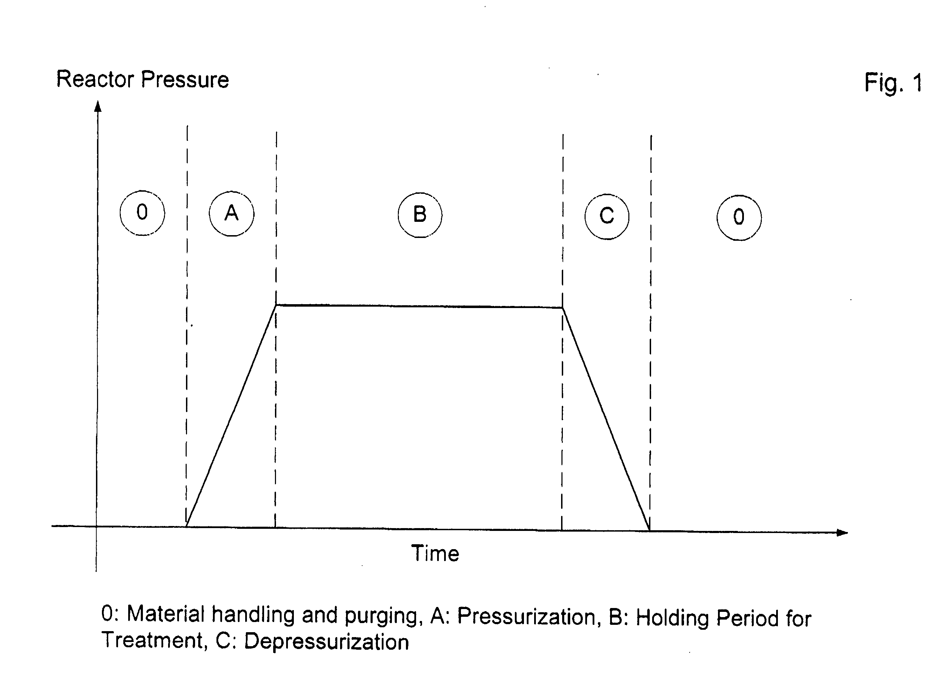

In Fig. 1, a pressure/time curve for a general supercritical treatment batch process is shown. Initially, the prepared food material to be treated is loaded into a pressure vessel. After a certain prepared food material handling and purging time, the cyclic supercritical treatment process may be divided into three consecutive steps:
A. a pressurization period
B. a holding period for supercritical treatment at elevated pressure
C. a depressurization period

In the pressurization period (A), the pressure vessel is pressurised by adding a fluid to the vessel until the pressure in the vessel exceeds the desired treatment pressure. The temperature in the vessel may be controlled by conventional means such as controlling the inlet temperature to the vessel in a heat exchanger before introducing the fluid into the pressure vessel and the temperature of the walls in the vessel, e.g. by using a jacketed pressure vessel with a heating or cooling fluid, electrical heating etc. The rate of pressure increase is shown to be constant, however the step of pressurization may have varying rates of pressure in other embodiments of the present invention. In a preferred embodiment, the rate of pressurization in at least part time of the pressurization period (A) is performed by controlling both the temperature and the pressure, and preferably such that in at least part time during the pressure interval from 40 to 120 bar the rate of pressure increase is at the most half of the maximum rate of pressure increase outside this pressure interval.

The holding period (B) for treatment starts when the desired pressure and temperature have been established. An extraction and/or an impregnation process may be performed during the holding period. During the holding period (B) for treatment the pressure may be maintained substantially constant or may be varied according to a predefined schedule.

After the holding period, the pressure vessel is depressurised in a controlled manner as further described below.

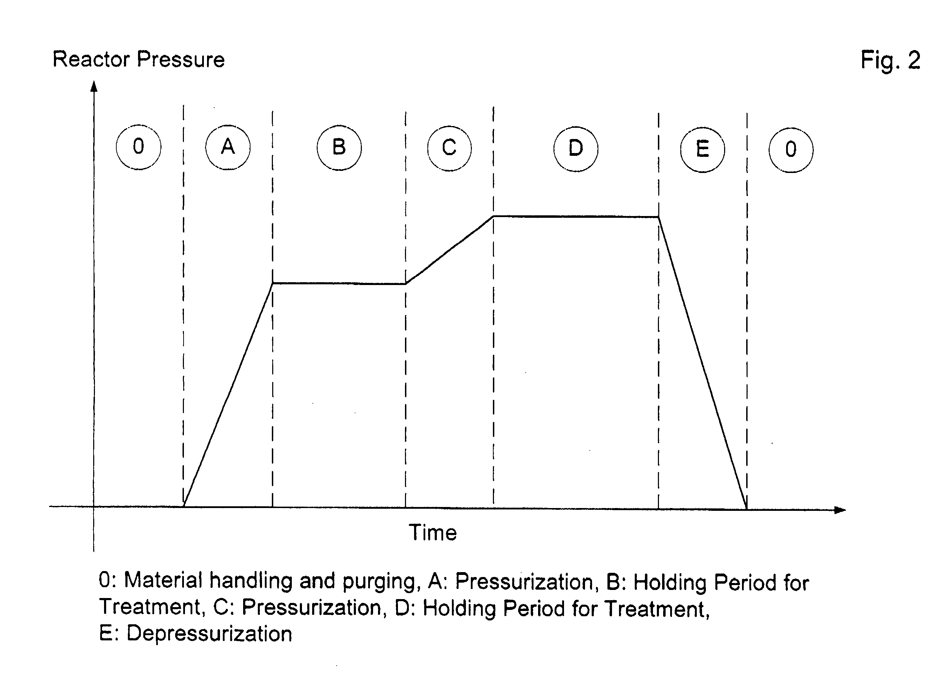

FIG.2 shows an example of a cyclic supercritical treatment method in a batch mode further comprising a second pressurization step and a second holding period and thus may be divided into the following consecutive steps:
A. a first pressurization period
B. a first holding period for supercritical treatment
C. a second pressurization period
D. a second holding period for supercritical treatment
E. a depressurization period

The prepared food material to be treated is initially loaded into the pressure vessel, and pressurization of the vessel during the first pressurization period (A) may be performed in a similar controlled manner as described above under Fig. 1 until the desired pressure and temperature for the supercritical treatment during the first holding period has been reached. In many embodiments according to the present invention, the pressure during said first holding period may be in the range 100-200 bar, and the temperature may be maintained in the range 30-120°C such as in the range 70-110°C. During said first holding period a selective extraction of species soluble under the conditions for the first holding period is performed by withdrawing part of the fluid present the pressurised vessel during said first holding period. The fluid is typically expanded to sub-critical conditions in one or more steps for separation of extracted species during said first holding period.

Subsequent to said first holding period the pressure and/or the temperature is increased in according to a predefined schedule to the desired operating pressure and temperature during said second pressurization period.

During said second holding period for supercritical treatment a second selective extraction may be performed e.g. of less soluble fat and/or oil species. Due to the previous extraction step wherein more soluble species have been extracted, such as cholesterol, the subsequent extracted species may be separated at a supercritical pressure. By extracting the species separately considerable savings in the energy consumption are obtained in that that low pressure soluble species are extracted first. After the second holding period the pressure vessel may be depressurised in a controlled manner as further described below.

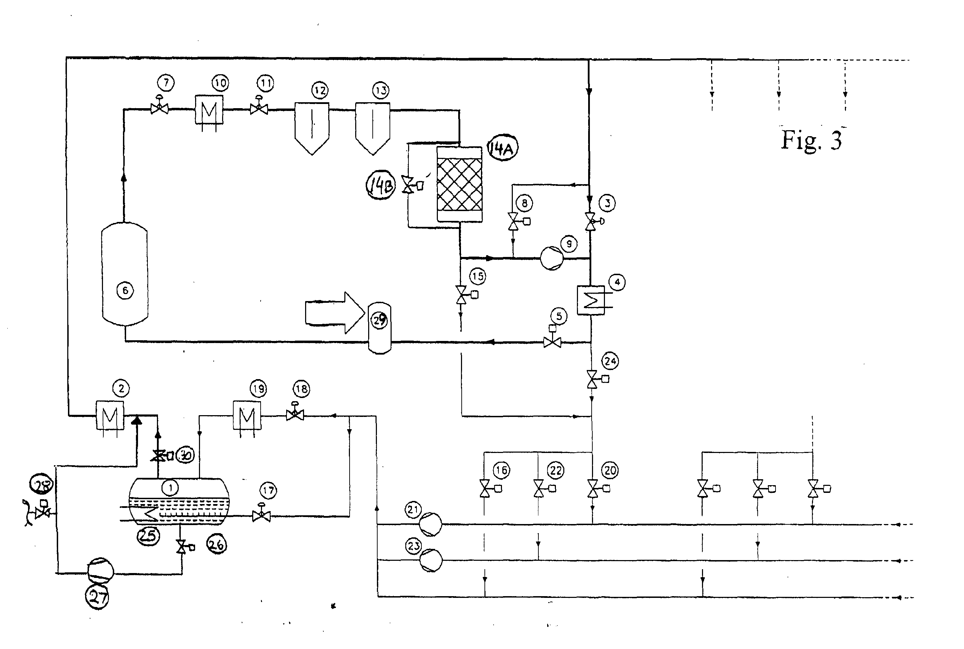

FIG. 3 shows an example of a generalized process diagram suitable for performing a method according to a preferred embodiment of the present invention.
It should be understood that the process may comprise several supercritical treatment lines in parallel as indicated in the figure. Typically a process according to the present invention comprises 2-6 lines operating sequentially in different stages of the cyclic process. The various lines may share some major components, such as the buffer tank (1), the control valves (17), (18), the condenser (19), the heat exchanger (2), and the compressors (21), (23) as indicated in the figure. These shared components are described in details below. For simplification only one pressure vessel (6) is shown in the figure.
A cyclic supercritical treatment process may be performed as follows:

The prepared food material to be treated is initially loaded in to the pressure vessel (6). CO₂ is stored/recovered in a common buffer tank (1) shared between several extraction lines as indicated on the figure. The pressure in the buffer tank (1) will typically be in the range 50-70 bars, and preferably at a pressure of approximately 60 bars. The level of the liquid CO₂ in the buffer tank (1) is controlled by pumping liquid CO₂ from a make up tank (not shown in the drawing), and the pressure is controlled by controlling the temperature in the buffer tank (1). The pressurization of the pressure vessel to the desired pressure and temperature for said first holding period is performed at a predefined inlet temperature to the pressure vessel (6) and at a predefined rate of pressure increase in the pressure vessel. In a preferred embodiment according to the present invention, said controlling the rate of pressure increase at a predefined rate involves controlling the rate of pressurization in at least part of the pressure range from 40 to 120 bars, such as in the range 60 to 110 bars such that the maximum rate of pressurization is at the most one half of the rate of pressure increase outside this pressure range. This predefined rate of pressurization in the specific may have a significant impact on maintaining the mechanical integrity of the prepared food material to be treated.

When starting the pressurization of the pressure vessel (6) gaseous CO₂ is drawn from buffer tank (1) and piped at said predefined rate through a heat exchanger (2), valve (3), heat exchanger (4), and valve (5). Optionally liquid CO₂ may also be withdrawn from the buffer tank through the valve (26), the pump (27) and the valve (28). Withdrawing gaseous CO₂ from the buffer tank (1) generates an evaporative cooling in the buffer tank (1), which is further described below. From a pressure of about 2 bar part of the CO₂ in the vessel may be withdrawn and re-circulated by the compressor (9). The CO₂ from the compressor (9) is mixed with the CO₂ from the buffer tank (1) after the valve (3). When the vessel (6) has reached a pressure slightly below the pressure in the buffer tank, then valve (3) is closed and valve (8) is opened and the compressor (9) is used to compress the gaseous CO₂ from approximately 60 bars to the desired supercritical pressure and temperature during said first holding period.

In many applications according to the present invention the pressure for said first holding period may be in the range 100-200 bars such as 150-200 bars and the temperature may be maintained in the range 40-120 ° C, such as in the range 60-110°C, and preferably in the range 80-110°C during said first holding period. During said first pressurization period, the compressor (9) is preferably operating so as to provide a large re-circulation rate through the vessel (6). This enables optimum control of temperature and heat and mass transfer throughout the vessel.

A selective supercritical extraction process may be carried out during said first extraction period. Highly.volatile species may be extracted during said first extraction period, while maintaining other species within said prepared food material being treated. Said species being extracted may comprise cholesterol, traces of pesticides and short chained fat and/or oil components. During said first holding period, part of the fluid is continuously withdrawn from the pressure vessel (6). The extracted species are separated from the extraction fluid by decreasing the pressure in one or more steps. In one embodiment 1-200 kg fluid per kg material, such as 5-40 kg/kg, is withdrawn during said first holding period. The fluid mixture exiting the pressure vessel (6) is typically expanded to sub-critical conditions through the valve (7), reheated in the heat exchanger (10) and expanded through the valve (11). The pressure after said expansion may be 60 - 80 bars. Subsequently dissolved species are separated in one or more separators (12, 13), whereupon the CO₂ may optionally be further cleaned in an activated carbon filter (14). A bypass of said activated carbon filter may in one embodiment exist (not shown). Nonlimiting examples of suitable separators (12, 13) include cyclones, gravimetric settling chambers, polyphase separators, membrane separators and combinations thereof. The separators may operate at the same or at decreasing pressures. In the latter case the first separator may be positioned before the second expansion valve (11). After separation the CO₂ is recompressed in the compressor (9) and the temperature is controlled in the heat exchanger (4) to provide the desired pressure and temperature for the extraction in the vessel (6).

After said first holding period the pressure is further increased and the temperature is controlled to the desired conditions for said second holding period by withdrawing CO₂ from the buffer tank(1) in a similar manner as described above for said first pressurization period. The operating conditions during said second holding period depend on the specific prepared food material to be treated and the specific components to be selectively extracted. Often the pressure during said second holding will be in the range 250-500 bar, such as in the range 300-400 bar and preferably in the range 300-350 bar. It is well known that the solubility of species in supercritical CO₂ generally increases with increasing density of the fluid. Even though the density decreases with increasing temperature, it has been found to be beneficial to apply a relatively high temperature during said second holding period. Without being bound to any specific theory, this is believed to be due to a higher permeability and/or partial pressure and/or volatility at higher temperatures. However, an upper limit of the temperature may exist as the prepared food material may deteriorate at too high temperatures e.g. by formation acrylamide and/or other undesired species. Hence, the temperature during said second holding period is preferably maintained in the range 50-120°C, such as in the range 85-110°C.

During said second holding period, part of the fluid is continuously withdrawn from the pressure vessel (6) in a similar manner as described above for the first holding period. The extracted species are separated from the extraction fluid by decreasing the pressure in one or more steps. However, in contrast to said first holding period said separation may be performed at supercritical conditions, which has become possible due to the selective extraction aspect of the present invention. Said separation may be performed at a pressure of at least 150 bars such as at least 200 bars, and preferably at a pressure above 200 bars depending on the specific operating pressure and the prepared food material being treated during said second holding period. Further said separation is typically performed at a pressure, which is at the maximum 200 bar below the pressure within the pressure vessel (6), such as a pressure which is at the maximum 150 bars below the pressure within the pressure vessel (6), and preferably at the maximum 100 bars below the pressure within the pressure vessel (6), such as at the maximum 50 bars below the pressure within the pressure vessel (6). This separation at supercritical conditions, which has become possible due to the present invention has a significant economic impact on the overall process economy compared to the conventional separation at sub-critical conditions. Further, it provides an opportunity of fractionating the extracted species by applying multiple separation steps operating at different pressures and temperatures (not shown on the figure). In the aspect of the present invention, where the prepared food material being treated is a prepared food product from a frying process, this allows the "good ones" to be separated from the "bad ones", and the "good ones" may be recycled to the frying process. The "bad ones" in this context may be the ones normally being a result of the degradation of the frying oil triacylglycerols by oxidation, polymerization, isomerization, cyclization and hydrolysis reactions, and may thereby provide a further benefit to the overall process economy. It should be noted that in a specific case said first and second extraction period may be performed at substantially the same operating pressure, and in that case the period of said first holding period may be relatively short compared to said second holding period, such as at the most one half of said second holding period, such as at the most one third of said second holding period and preferably at the most one fourth of said second holding period.

A method according to the present invention may further comprise a third and/or fourth and/or multiple holding period(s) involving a supercritical treatment at the same and/or at an increased and/or decreased pressure depending of the specific prepared food material to be treated and the specific species and/or functional ingredients to be added.
One or more co-solvent(s) may be added to the supercritical CO₂ in any of the holding period(s) described above. In such embodiments said co-solvent(s) is added in the mixer (29). Said mixer is preferably containing a high surface area packing prepared food material so as to provide a high contact area for addition of said co-solvent.

A specific embodiment of the present invention involve one or more additional supercritical holding period(s), wherein said one or more selective extraction step(s) are followed by an additional holding period involving treatment by a supercritical fluid or supercritical fluid mixture being more polar than in the previous holding periods. Said one or more extraction step(s) may involve one or more step(s) at substantially the same pressure and/or at a higher pressure and /or at a lower pressure than the previous holding step(s). In a particularly preferred embodiment according to the present invention said further supercritical treatment may comprise a treatment by a supercritical fluid mixture comprising supercritical CO₂ and an alcohol such as methanol or ethanol in an amount of up to 30 % by weight such as an amount up to 20 % by weight, and preferably an amount of up to 10 % by weight, and even more preferably in an amount of up to 5 % by weight , and said fluid mixture may be used to extract undesired species such as acrylamide. Subsequent to said one or more treatment(s) comprising a co-solvent and additional CO₂ purging and/or extraction step may be performed to purge/remove/extract excess co-solvent from the material.

In addition to said supercritical treatment during said one or more holding period(s), one or more supercritical impregnation and/or coating period(s) may be performed subsequent to said one or more extraction period(s) for selective extraction of species.
Said one or more impregnation and/or coating periods may involve adding one or more functional ingredients to said prepared food material being treated in said pressurised vessel in one or more steps. Said one or more ingredient(s), which may be added may include one or more components having an organoleptic effect such as one or more agents selected among the following agents: Colouring agents, aroma compounds, flavours, spices, odours, nutrient and micro-nutrients such as vitamins, antioxidants, bioactive peptides, phospolipids, enzymes, conjugated linoleic acids (CLA), antioxidizing agents, carbohydrates, Gingko, plant sterols, saturated fats, proteins and species having a pharmaceutical effect.

After and/or between said holding period(s) described above, the pressurized vessel (6) is depressurized in one or more step(s). When depressurising the pressurized vessel (6), vapour phase CO₂ is piped in a controlled manner through valve (15) and valve (16). This depressurization generally involves controlling the rate of depressurization and the temperature during depressurization according to a predefined schedule so as to maintain the mechanical integrity of the prepared food material being treated. This involves controlling that the fluid present in the pressure vessel (6) is never entering into a liquid and/or solid state within the vessel during said depressurization period(s). Further this involves controlling the rate of depressurization in the pressure range between 120 bar to 40 bar, and particularly in the range between 110 to 60 bars, so that the rate of pressure increase in this range is at the most half of the maximum rate of depressurization outside this range, such as the most one third of the rate of depressurization outside this range. The major part of the CO₂ is often entering the buffer tank (1) through valve (17), from where it is condensed by direct spraying into the liquid CO₂ phase in the buffer tank (1). Part of the CO₂ pass through the valve (18) into the condenser (19), where the CO₂ gas is liquefied before entering the buffer tank (1). As heat is generated from the direct condensation in the buffer tank (1), the heat needs to be removed in order to maintain a substantially constant temperature in the buffer tank (1). This is done by balancing the heat consumed by the evaporative cooling generated from the gas being withdrawn from the buffer tank (1). This balancing of the temperature in the buffer tank is performed by:
a) Controlling the split between the amount of CO₂ entering the buffer tank (1) as a liquid through the valve (18) and the condenser (19), and the amount of CO₂ being introduced directly into the liquid phase in the buffer tank (1) through the valve (17),
b) Fine tuning of the temperature in the buffer tank by extracting or adding heat through the heat exchanger (25) immersed in the liquid phase in the buffer tank (1) and/or optionally withdrawing liquid CO₂ from the buffer tank (1) to an external heat exchanger (not shown) and re-circulating the liquid CO₂ to the buffer tank (1),
c) Controlling the liquid level in the buffer tank (1) by adding make up CO₂ from a CO₂ make-up tank (not shown)
It should be noticed that the buffer tank (1) needs to have a certain volume in order to work properly as a buffer tank, and in order to damp potential fluctuations of the temperature and pressure in the tank. The volume of the buffer tank compared to the total system volume of all lines (excluding the buffer tank (1)) is generally in the range 50-300 %, and preferably in the range 100-150 %.

The further depressurization of extraction vessel (6) from approx. 60 bars to a pressure in the range 20-30 bars is performed through valve (15), valve (20) and compressor (21). The valve (24) is closed during this operation to ensure that no back flow occurs. The compressor (21) may be a one-stage compressor. After the compressor the CO₂ is discharged to the buffer tank (1) through the valves (17) and/or (18) and heat exchanger (19) as described above for the pressure range 120-60 bars.

It should be noticed that depressurization from 60 to a pressure in the range 20-30 bar also may be performed using the re-circulation compressor (9), but a system of two compressors is generally preferred due to capacity and redundancy considerations.

The depressurization of the vessel from a pressure in the range 20-30 bars to a pressure in the range 2-6 bars (6) is performed through the valve (22) by the compressor (23). After the compressor the CO₂ is again discharged to the buffer tank (1) through the valves (17) and/or (18) and heat exchanger (19) as described above. The final depressurization is performed by venting off the fluid vessel to the atmosphere (not shown). The pressure for this depressurization step is set by the desired recovery of the CO₂. If a high CO₂ recovery is desired, the pressure for the final stage will typically be in the range 1-3 bars above ambient pressure. In this case the compressor (23) may comprise a three stage compressor. If a lower CO₂ recovery is desired, the compressor (23) may comprise a 2 stage compressor.

It should be noticed that the compressors (21, 23) are often only used in a limited part of the cyclic process, such as 10-35 % of the total cycle time. As such compressors are relatively expensive the compressors (21, 23) may preferably be shared between several extraction lines as indicated in the figure. It should further be noticed that the compressors (21, 23) may comprise more than one compressor operating in the same pressure range in order to fulfil redundancy and/or economical demands.

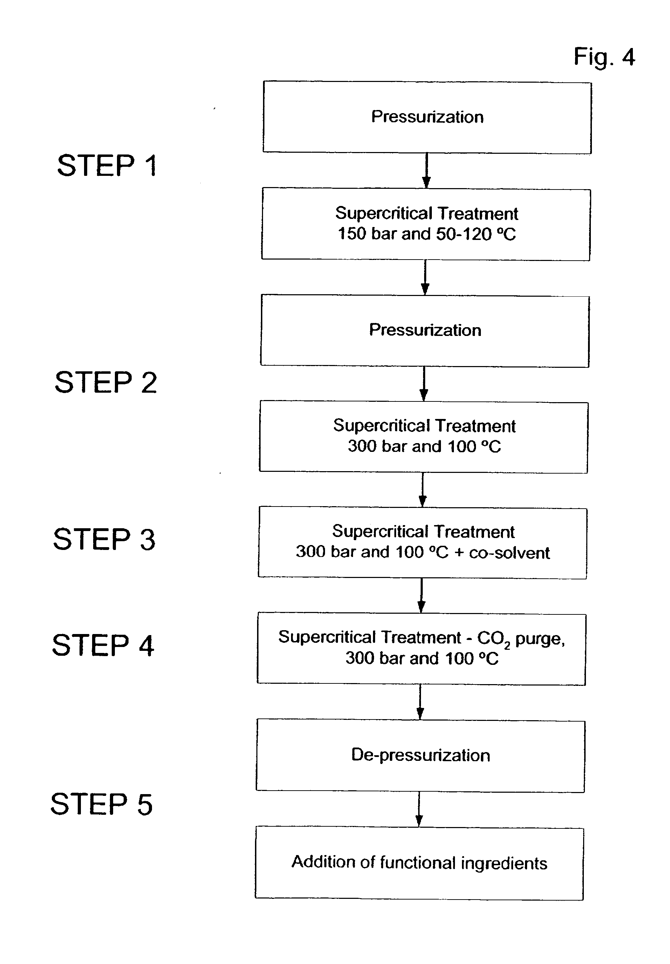

One or more further and/or complementary treatment step(s) for addition of a functional ingredients such as: Colouring agents, aroma compounds, flavours, spices, odours, nutrient and/or micro-nutrients such as vitamins or precursors for vitamins, antioxidants, bioactive peptides, phospolipids, enzymes or co-enzymes, conjugated linoleic acids (CLA), antioxidizing agents, carbohydrates, gingko, plant sterols, saturated fats, proteins and/or minerals such as iron, chromium, copper, cobalt, iodine, selenium, zinc and/or species having a pharmaceutical effect, may be added in one or more post-processing step(s) e.g. by spraying said functional ingredients on the surface of said prepared food material after said one or more supercritical treatment steps as shown below in figure 4.

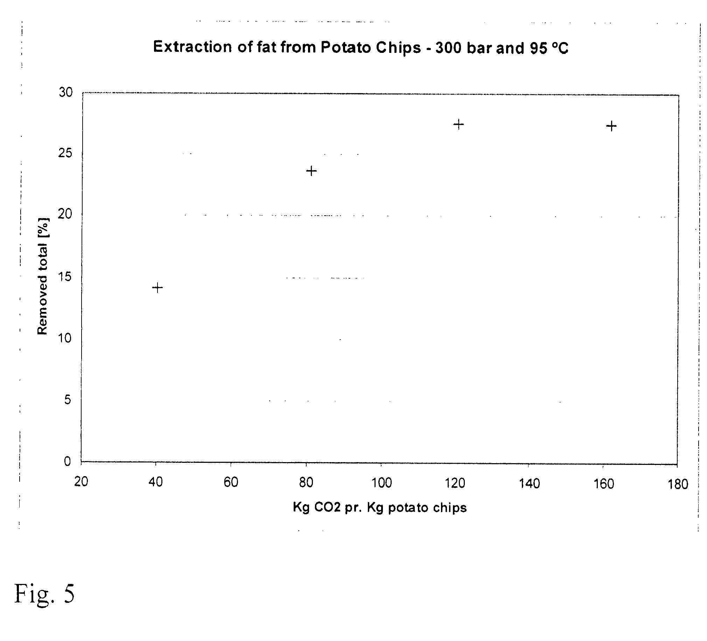

FIG.4 shows a flow diagram for the stepwise treatment of a snack product such as potato chips according to the present invention. In a preferred embodiment according to the present invention a stepwise treatment of potato chips and/or other salted snack products may be performed as shown in figure 5. In Step 1 the system is pressurized to a certain pressure at a controlled temperature for a given time for e.g. the removal of cholesterol and/or other undesired components soluble at a lower pressure. In Step 2 the system is pressurized to a new set point at a controlled temperature for a given time for the removal of fat and oil as described and illustrated above in relation to figure 4. Subsequently a co-solvent is introduced to the system for example 10 w/w percent ethanol for the removal of acrylamide. After the co-solvent step the system is purged with CO₂ for a given time followed by a depressurization step. Finally a chosen number and amount of functional ingredients are added to the potato chips for example by a spray process at ambient conditions.

The definition of flavour and taste relates to organoleptic tests. A way of characterizing the value of taste and flavour is by using a professional test panel as described by Warner and Gupta, where a 16-member analytical descriptive sensory panel, trained and experienced in evaluating fried foods, were presented with potato chip samples at room temperature in plastic souffle cups with snap-on lids. Each panelist receives a number of randomized samples. Panelists rate the potato chips for intensities of individual flavours such as deep fried, potato, stale, rancid, cardboard, and fishy on a 10-point scale with 0 = no intensity and 10 = strong intensity. An overall flavour quality of the potato chips on a 10 point quality scale with 10 = excellent and 1 = bad can also be conducted [Warner and Gupta, 2005].

Additionally a flavour and/or taste improving substance and/or flavonoids may be added to the food product enhancing the flavour and taste of the final product.

Besides the fat content a number of other species having a detrimental health effect are also commonly present in prepared foods. Examples of such undesirable species are cholesterol and acrylamide. In one embodiment of the present invention the method further comprises extraction of these undersirable species.

### ILLUSTRATIVE EXAMPLE 1: Extraction of fat from potato chips

Experiments were conducted for the extraction of fat from commercial potato chips from KIMs. In the experiments 250 gram of potato chips was loaded and treated by a supercritical extraction process in a 10 I pressure vessel with supercritical CO₂ at 95 °C and a CO₂ amount of 80 kg CO₂ pr. kg chips. The pressure and extraction results are shown in table 1.

**Table 1. Extraction conditions and results for the extraction of fat from potato chips.**

| **Pressure [Bar]** | **Fat content before [w/w %]** | **Fat content after [w/w %]** | **Taste** | **Physical appearance, mechanical integrity** |
|---|---|---|---|---|
| 200 | 32 | 30.5 | +++++ | Unchanged |
| 300 | 32 | 6.1 | ++++ | Unchanged |
| 400 | 32 | 1.5 | + | Unchanged |

The results in table 1 show that the pressure has a great impact on fat reduction of potato chips. As a consequence of the fat and/or specific fat and oil species removed from the potato chips, the taste changes. The taste is rated on a scale from 1 to 5 with 5 being the taste of the untreated potato chips. When the fat content is as low as 1.5 w/w % the taste is significantly altered. At a fat content of 6.1 w/w % the taste is substantially the same as in the chips before extraction and the taste with almost no fat removed is the same as in the potato chips before extraction. In all experiments the physical appearance and mechanical integrity of the potato chips was unchanged.

### ILLUSTRATIVE EXAMPLE 2:

### Effect of the amount of CO₂ used per kg of prepared food material

The amount of CO₂ to remove fat from potato chips was investigated. In the experiments 250 gram of potato chips was loaded and treated by a supercritical extraction process in a 10 I pressure vessel with supercritical CO₂ at 95 °C as in illustrative example 1. The pressure was maintained at 300 bar and the amount of CO₂ to extract the fat from the potato chips was changed.

In Fig. 5 non-optimized extraction results of fat removal at 300 bar and 95 °C can be seen.

It can be observed that the present invention can tune the removal of fat by changing the amount of CO₂ used for the extraction. Using 80 kg CO₂/kg chips a total removal of 24 w/w % is achieved corresponding to a final fat content of 10 w/w %. At 120 kg CO₂/kg chips and more the total removal is 28 w/w % corresponding to a final fat content of approximately 6 w/w %.

### ILLUSTRATIVE EXAMPLE 3:

### Energy consumption by the present invention compared to prior art process

An embodiment of the present invention involves reducing the fat content in potato chips by supercritical extraction and separation of the extracted fat from the extraction fluid at supercritical conditions.

In the table below, the energy consumption related to separation of said dissolved species at supercritical conditions according to the present invention, is compared with conventional separation at sub-critical conditions. For clarity said extraction in said predefined time is performed at constant pressure and temperature within said pressure vessel (the holding period), and all calculations is performed for a constant amount of CO₂ of 80 kg CO₂ pr. kg potato chips.

The cyclic process comprises extraction at Tₑₓₜᵣ and P_{extr.} and separation at T_{sep.} and P_{sep.}. The calculation is performed as a four step cycling process including 1) Adiabatic expansion from Pₑₓₜᵣ. to Pₛₑₚ., 2) Isobaric cooling/heating from Tₑₓₜᵣ to Tₛₑₚ 3) Isentropic compression from Pₛₑₚ.to Pₑₓₜᵣ with an isentropic compressor efficiency of 0.6, 4) Isobaric heating/cooling from Tₛₑₚ to Tₑₓₜᵣ.

For simplicity both the work and the heat are included as simple additive terms, implying that one unit of heat, a joule, is equivalent to the same unit of work.

**Table 2. Comparison of energy consumption at various extraction and separation conditions for the extraction of fat from potato chips.**

| | **P_{extr.} [Bar]** | **T_{extr.} [°C]** | **ρ_{extr.} [kg/m³]** | **P_{sep.} [Bar]** | **T_{sep.} [°C]** | **ρ_{sep.} [kg/m³]** | **Energy consumption [kWh/kg chips]** |
|---|---|---|---|---|---|---|---|
| Present invention | 300 | 100 | 662 | 200 | 75 | 626 | 1.27 |
| Present invention | 350 | 100 | 715 | 200 | 75 | 626 | 1.65 |
| Present invention | 400 | 100 | 756 | 200 | 75 | 626 | 2.16 |
| Present invention | 500 | 100 | 818 | 200 | 75 | 626 | 3.15 |
| Present invention | 300 | 100 | 662 | 150 | 75 | 465 | 2.29 |
| Present invention | 300 | 100 | 662 | 200 | 100 | 482 | 2.92 |
| Present invention | 350 | 100 | 715 | 150 | 75 | 465 | 3.23 |
| Present invention | 350 | 100 | 715 | 250 | 100 | 589 | 2.09 |
| Conventional | 400 | 55 | 907 | 11 | 55 | 19 | 34.03 |
| Conventional | 400 | 55 | 907 | 70 | 55 | 163 | 14.94 |

As shown in Table 2 the energy consumption according to the present invention is a factor 4-10 lower than by conventional separation.

### ILLUSTRATIVE EXAMPLE 3:

### Extraction of fat from potato chips by the present invention compared to the process proposed by Vijayan et al.

In the present invention the fat content in potato chips is reduced or removed by a supercritical extraction with an overcritical separation of the extracted fat. In an example for the energy consumption an energy balance is calculated for the holding period according to the present invention, Fig. 1-2. The holding period comprises an extraction at Tₑₓₜᵣ and P_{extr.} and a separation at T_{sep.} and P_{sep.}. The calculation is performed as a four step cycling process including 1) Adiabatic expansion, 2) Isobaric cooling/heating, 3) Isentropic compression, with an isentropic compressor efficiency of 0.6, 4) Isobaric heating/cooling. For simplicity both the work and the heat are included as simple additive terms, implying that one unit of heat, a joule, is equivalent to the same unit of work. The results are presented in table 2 and the process proposed by Vijayan et al., presented in Brunner 2005 and in chapter 6, page 75-92, in Rizvi 1994 is included as reference. The amount of CO₂ is chosen to 80 kg CO₂ pr. kg chips.

**Table 2. Energy consumption and extraction and separation conditions for the extraction of fat from potato chips.**

| | **Pₑₓₜᵣ. [Bar]** | **Tₑₓₜᵣ. [°C]** | **ρ_{extr.} [kg/m³]** | **Pₛₑₚ. [Bar]** | **T_{sep.} [°C]** | **ρ_{sep.} [kg/m³]** | **Energy consumption [kWh/kg chips]** |
|---|---|---|---|---|---|---|---|
| Present invention | 300 | 100 | 662 | 200 | 75 | 626 | 1.27 |
| Present invention | 350 | 100 | 715 | 200 | 75 | 626 | 1.65 |
| Present invention | 400 | 100 | 756 | 200 | 75 | 626 | 2.16 |
| Present invention | 500 | 100 | 818 | 200 | 75 | 626 | 3.15 |
| Present invention | 300 | 100 | 662 | 150 | 75 | 465 | 2.29 |
| Present invention | 300 | 100 | 662 | 200 | 100 | 482 | 2.92 |
| Present invention | 350 | 100 | 715 | 150 | 75 | 465 | 3.23 |
| Present invention | 350 | 100 | 715 | 250 | 100 | 589 | 2.09 |
| Vijayan et al.^{*} | 400 | 55 | 907 | 11 | 55 | 19 | 34.03 |
| Vijayan et al.* | 400 | 55 | 907 | 70 | 55 | 163 | 14.94 |

| | | | | | | | |
|---|---|---|---|---|---|---|---|
| *For the Vijayan et al. calculation the CO₂ amount is chosen to be the same as for the calculation of the present invention. | | | | | | | |

As shown in Table 2 the energy consumption by the present invention is a factor 4-10 lower than in the process proposed by Vijayan et al. The CO₂ amount is chosen to be 80 kg CO₂ pr. kg chips for the Vijayan et al. process as in the present invention. Furthermore, the separation pressure is chosen to 70 bar and 11 bar for the Vijayan et al. process. In Rizvi 1994 they report a separation pressure in the range 1.1 - 69 MPa.
From table 2 it is shown that besides being able to extract 95 % of the fat or more from potato chips depending on operation conditions the present invention is also more energy efficient compared to Vijayan et al.

## Claims

1. A fat reducing method for treating a prepared food material having a mechanical integrity, comprising the steps of:
a. supplying said prepared food material to be treated into a vessel,
b. subjecting said prepared food material to at least one fluid at supercritical conditions in said vessel,
c. pressurising said vessel,
d. maintaining said prepared food material in contact with said fluid or fluid mixture a predefined time in order to extract at least one specie from the material into the fluid or fluid mixture,
e. withdrawing at least part of said fluid or fluid mixture present in said vessel at least part time of said method, and separating dissolved species from said fluid or fluid mixture being withdrawn at least part time of said method, and subsequently feeding the fluid or fluid mixture back to said pressure vessel,
f. depressurising said vessel,
wherein said mechanical integrity of said prepared food material is maintained by controlling the rate of pressurization and depressurization during said one or more pressurization step/-s and/or one or more depressurization step/-s in a predefined manner in specific pressure intervals.

2. A method according to claim 1, wherein the pressure in said vessel after pressurisation is in the range 85-1000 bar, preferably in the range 85-500 bar, such as in the range 200-400 bar, and even more preferably in the range 250-400 bar such as in the range 300-375 bar.

3. A method according to claim 1 or 2, wherein the temperature in the vessel is maintained in the range 60-200°C, such as 60-150°C, and preferable in the range 75-120°C, and more preferable in the range 80-110°C such as in the range 90-105°C.

4. A method according to any of the preceding claims, wherein the steps c) to e) are repeated in order to extract at least one other species.

5. A method according to any of the preceding claims, wherein at least one of said separations during step e) is done at supercritical conditions.

6. A method according to claim 4 or 5, wherein the pressure within said vessel during a first run of the steps c) to e) are less than 200 bar and the pressure within said vessel during a second run of the steps c) to e) are up to 380 bar.

7. A method according to claim 6, wherein the temperature within said vessel during the first run is in the range 35-120°C, such as in the range 40-105°C and the temperature within said vessel during the second run is in the range 70-150°C, such as in the range 80-120°C.

8. A method according to any of the preceding claims, wherein the method has an energy consumption during the treatment, and that the energy consumption per kg of prepared food material is less than 10 kWh per kg of prepared food material treated such as less than 5 KWh per kilogram of prepared food treated, preferably less than 3 kWh per kg of prepared food material treated such as less than 1.5 kWh per kg of prepared food treated, and even more preferably the energy consumption is less than 1 kWh per kg of prepared food material treated such as less than 0.5 kWh per kg of prepared food material treated.

9. A method according to any of the preceding claims, wherein the amount of fluid and/or fluid mixture used to treat said prepared food material during said one or more predefined times is less than 300 kg of fluid per kg of prepared food material such as less than 150 kg of fluid per kg prepared food material, preferably less than 80 kg of fluid per kg of prepared food material such as less than 50 kg of fluid per kg of prepared food material, and even more preferably less than 35 kg of fluid per kg of prepared food material such than less than 20 kg of fluid per kg of prepared food material.

10. A method according to any one of the preceding claims, wherein one or more functionally tailored ingredient/-s is/are added subsequent to said extraction before, during or after step f).

11. A method according to any one of the preceding claims, wherein the rate of pressurization and/or the rate of depressurization in at least part of the pressure range from 40-120 bars is at the most one half of the maximum rate of the pressurization or depressurization outside this range, such as maximum one third of the maximum rate of pressurization and depressurization outside this pressure range, and preferably at the most one fifth of the maximum rate of pressurization outside this pressure range, such as at the most one tenth of the maximum rate of pressurization outside this pressure range.

12. A method according to any of the preceding claims, wherein said prepared food material having a reduced content of species comprises a primary product of the method, wherein the primary product has been separated from fluid and re-introduced into the vessel.

13. A method according to any of the preceding claims, wherein said prepared food material treated according to the method is a food product or intermediate product for a food product.

14. A method according to any of the preceding claims, wherein said prepared food material being treated is selected among a snack product, a dairy product, a meat product, a biscuit product, a cereals product a baked goods product or an intermediate for such products.

15. A method according to any one of claims 1-13, wherein said material is a snack product or an intermediate product for a snack product.

16. A method according to any one of claims 1-13, wherein said material is a snack from a natural product such as potato chip(s), banana chip(s), corn or popcorn(s), nut(s) such as peanuts nut(s), hazelnut(s), pistacie nut(s), chest nut(s), almond(s) or the like products.

17. A method according to any of the preceding claims, wherein said material is a fried and/or baked material and/or a salted material and/or a spiced material and/or a potato material, such as potato chips.

18. A method according to any of the preceding claims, wherein total water content of said prepared food material treated according to the method is substantially unchanged.

19. A method according to any of the preceding claims, wherein the taste of said prepared food material treated according to the method is substantially unchanged or enhanced.

20. A method according to any of the preceding claims, wherein the flavor of said prepared food material treated according to the method is substantially unchanged or enhanced.

21. A method according to any of the preceding claims, wherein at least one of said species being extracted from said prepared food material is lipids such as oil and/or fat components.

22. A method according to claim 21, wherein said prepared food material is being reduced in the content of oil(s) and/or fat component(s) is/are reduced by at least 30 % such as at least 40 % and preferably at least 50 %, such as 60 %, and more preferably by at least 70 % such as at least 80 %, and even more preferably by at least 90 % such as at least 95 %.

23. A method according to any claims 4-22, wherein at least one of said species comprises carcinogenic species.

24. A method according to any 4-22, wherein at least one of said species comprises acryl amide.

25. A method according to claim 24, wherein said reduction of acryl amide is least 10 % such as at least 25 %, and preferably at least 40 % such as least 50 % and even more preferable at least 70 % such as at least 90 %.

26. A method according to any of the preceding, wherein at least one of said species comprises pesticides and/or insecticides and/or cholesterol.

27. A method according to any of the preceding claims, wherein at least one of said fluid(s) being at supercritical state is selected from the group consisting of carbon dioxide, alcohols such as methanol, ethanol, propanol, isopropanol, buthanol, isobuthanol, pentanol, hexanol, water, methane, ethane, propane, buthane, pentane, hexane, cyclohexane, heptane, ammonia, sulfurhexafluoride, nitrous oxide, chlorotrifluoromethane, monofluoromethane, acetone, THF, acetic acid, citric acid, ethylene glycol, polyethylene glycol, N,N-dimethylaniline and mixtures thereof.

28. A method according to any of the preceding claims, wherein one of the fluids is CO₂.

29. A method according to any of the preceding claims, wherein said fluid further comprises at least one co-solvent.

30. A method according to claim 29, wherein the co-solvent is selected from the group consisting of alcohol(s), water, ethane, ethylene, propane, butane, pentane, hexane, heptane, ammonia, sulfurhexafluoride, nitrous oxide, chlorotrifluoromethane, monofluoromethane, methanol, ethanol, propanol, isopropanol, buthanol, pentanol, hexanol, acetone, DMSO, THF, acetic acid, ethyleneglycol, polyethyleneglycol, N,N-dimethylaniline and mixtures thereof.

31. A method according to any of the claims 29-30, wherein said co-solvent is ethanol and present in an amount of up to 30 w/w % such as up to 15 w/w %, and preferably in an amount of up to 10 w/w % such as up to 5 w/w % in at least part of said method.

32. A method according to any of the preceding claims, wherein the density of said fluid at supercritical conditions is maintained in the range 200-850 kg/m3 such as in the range 300-800 kg/m3, preferably in the range 400-750 kg/m3 such as in the range 500-750 kg/m3.

33. A method according to any of the preceding claims, wherein said predefined time/-s for maintaining contact with said fluid at supercritical conditions is in the range 1 minute to 600 minutes, such as 10 minutes to 300 minutes, and preferably in the range 20 minutes to 240 minutes such as in the range 30 minutes to 180 minutes, and even more preferably in the range 30 minutes to 120 minutes.

34. A method according to any of the preceding claims, wherein said fluid is withdrawn during said predefined time interval(s).

35. A method according to any of the preceding claims, wherein the amount of fluid being withdrawn during said predefined time is in the range 1-200 kg of fluid per kg of prepared food material such as in the range 2-100 kg of fluid per kg of material, and preferably in the range 5-85 kg of fluid per kg of prepared food material such as in the range 7,5-65 kg of fluid per kg of prepared food material such as in the range 10-50 kg of fluid per kg of material, and even more preferably in the range 12,5-40 kg of fluid per kg of prepared food material such as in the range 15-30 kg of fluid per kg of material.

36. A method according to any of the preceding claims, wherein said fluid being withdrawn from said vessel with said species extracted from said prepared food material dissolved therein, is withdrawn to an external re-circulation loop, said re-circulation loop comprising:
- means for separating said extracted species from said fluid
- means for feeding said fluid back to said vessel

37. A method according to any of the preceding claims, wherein the method further comprises the use of separation means and wherein the separation means comprise(s) one or more cyclones.

38. A method according to claim 37, wherein the pressure within said cyclone/-s is/are decreasing.

39. A method according to any of the preceding claims, wherein a fractionation of said separated extracted species is/are obtained.

40. A method according to any of the preceding claims, wherein said separation is performed at a pressure at the max 200 bar below the pressure within said vessel such as at the max. 150 bar below the pressure within said vessel, and more preferably at the max. 100 bar below the pressure within said vessel such as at the max. 50 bar below the pressure within said vessel.

41. A method according to any of the preceding claims, wherein said separation is performed at a pressure above 150 bar such as above 200 bar, and preferably at a pressure above 250 bar such as a pressure above 300 bar, and even more preferably at a pressure above 350 bar such as a pressure above 400 bar.

42. A method according to any of the preceding claims, wherein said separated species are fractionated and at least partly recycled to a pre-processing step.

43. A method according to any of the preceding claims, said method further comprises controlling the thermodynamic state in said vessel so as to obtain a selective extraction of species from said material, while substantially maintaining other extractable components in said material.

44. A method according to any of the preceding claims, wherein said selective extraction of species is further controlled by substantially saturating the extraction fluid with components desired to be maintained in said material.

45. A method according to any of the claims 4-44, wherein said method comprises subsequent extraction steps, where the thermodynamic state in each step is controlled so as to obtain a pre-selected state in which a pre-defined extraction of species from the prepared food material in said vessel occur.

46. A method according to any of the preceding claims, wherein the pressure during steps d) and e) is increasing or decreasing.

47. A method according to any of the preceding claims, wherein the pressure during steps d) and e) is substantially constant during the predefined time.

48. A method according to any of the claims 4-47, wherein the thermodynamic state during said predefined time in the second run is controlled so as the temperature in the vessel is in the range 70-150 C such as in the range 80-120 C, and is controlled so as the pressure in the vessel is in the range 200-500 bar such as in the range 250-350 bar.

49. A method according to any of the preceding claims, further comprising multiple subsequent extraction steps before depressurizing said pressure vessel to ambient conditions.

50. A method according to any of the claims 10-49, wherein said at least one ingredient added includes a colouring agent and/or at least one aroma compound and/or at least one flavour compound and/or at least one spices and/or at least one odour compound.

51. A method according to any of claims 10-49, wherein said one or more ingredient(s) added include(s) one or more vitamins such as vitamin A and/or vitamin B and/or vitamin C and/or vitamin D and/or vitamin E.

52. A method according to any of claims 10-49, wherein said one or more ingredient/-s added include/-s one or more minerals.

53. A method according to any of the preceding claims, wherein said method further comprises at least one impregnation or coating step at supercritical conditions for adding said ingredient(s) to said material.

54. A method according to claim 53, wherein said at one or more impregnation or coating step(s) is/are performed subsequent to said one or more extraction step(s) for extracting species prior to said one or more depressurisation step(s).

55. A method according to claim 53, wherein said one or more impregnation or coating step(s) is performed subsequent to said one or more extraction step(s) for extracting species during said one or more depressurisation step(s).

56. A method according to any one of claims 10-55, wherein said addition of said one or more ingredient(s) is/are performed as post-process after said supercritical treatment.

57. A method according to any one of claims 10-56, wherein said addition of said one or more ingredient(s) is addition of an oil.

58. A method according to any one of the preceding claims, wherein said one or more ingredient(s) is/are added by spraying.

59. A method according to any one of the preceding claims, wherein the oil and fat content after treatment according to the method is below 16 % by weight, such as below 12 % by weight, and preferably below 5 % by weight such as below 3 % by weight.

60. A method according to any one of the preceding claims, said method further comprising re-circulating at least part time of the method at least part of the fluid contained within the vessel, the re-circulating comprising :withdrawing from the vessel at least part of the fluid contained within the vessel and feeding it to an external re-circulation loop and subsequently feeding the fluid to the vessel, wherein the fluid after the pressurisation step is in a supercritical state, wherein the fluid in the re-circulation loop has substantially the same thermodynamic properties as the fluid in the vessel, such as the fluid does not undergo a phase change to a liquid or solid state.

61. A method according to any of the claim 60, wherein said re-circulation is performed during the pressurisation step and/or during the pressurisation or depressurisation step.

62. A method according to any of the claims 60-61, wherein the re-circulation loop comprises a vessel for introducing ingredients to said fluid present in said re-circulation loop.

63. A method according to any of the preceding claims, wherein the prepared food material has a moisture content of less than 20 w/w%, less than 10 w/w%, less than 5 w/w% and preferably less than 3 w/w%, and wherein the moisture content is substantially unchanged after the treatment.

64. A method according to any of the preceding claims, wherein the density of the fluid in the vessel is varied between an uppermost and lowermost level in a predefined manner during one or more of said supercritical treatment step/-s.

65. A method according to claim 64, wherein the said density variations corresponds to a density change between said uppermost and lowermost level corresponds to a density change of up to 75 % such as up to 50 %, and preferable up to 30 % such as up to 15 %.

66. A method according to claim 65, wherein said density change is at least partly introduced by varying the temperature of the fluid in the re-circulation loop according to a predefined schedule.

67. An apparatus comprising one or more of the means disclosed in any of the preceding claims and being adapted to carry out the method according to any of the preceding claims.

68. A product obtainable according to a method in any of the preceding claims.
